Europäisches Patentamt

**European Patent Office**

Office européen des brevets

(19)

(11) Publication number: **0 099 259**

A1

(12)

# EUROPEAN PATENT APPLICATION

(21) Application number: **83304003.3**

(22) Date of filing: **08.07.83**

(51) Int. Cl.³: **G 11 B 5/70**

(30) Priority: 09.07.82 JP 120178/82
13.08.82 JP 141282/82
17.08.82 JP 142838/82

(43) Date of publication of application:
25.01.84 Bulletin 84/4

(84) Designated Contracting States:
DE FR GB

(71) Applicant: KONISHIROKU PHOTO INDUSTRY CO. LTD.
No. 26-2, Nishishinjuku 1-chome Shinjuku-ku
Tokyo 160(JP)

(72) Inventor: Murata, Hideki
No. 3811-1, Haijima-Cho
Akishima-Shi Tokyo 196(JP)

(72) Inventor: Watanabe, Hiroshi
No. 2-5-19, Ohwada-Cho
Hachioji-Shi Tokyo 192(JP)

(72) Inventor: Fujimatsu, Wataru
No. 634-3, Nishiterakata-Machi
Hachioji-Shi Tokyo 192(JP)

(72) Inventor: Matsumoto, Kazumasa
No. 3-24-11, Akabanenishi
Kita-ku Tokyo 115(JP)

(72) Inventor: Yoshida, Shigeki
No. 2-5-19, Ohwada-Cho
Hachioji-Shi Tokyo 192(JP)

(74) Representative: Ellis-Jones, Patrick George
Armine et al,
J.A. KEMP & CO. 14 South Square Gray's Inn
London WC1R 5EU(GB)

(54) Process for producing surface-treated ferromagnetic particles and magnetic recording medium using such particles.

(57) A process for producing surface-treated ferromagnetic particles suitable for use in high-density recording, as well as a magnetic recording medium using such ferromagnetic particles are disclosed. The process is characterized by dispersing ferromagnetic particles in an electrolytic solution and then treating said particles with a surfactant having electric charges of a polarity opposite to that of the charges on the surfaces of said particles. The magnetic recording medium is characterized by having formed on a non-magnetic base a magnetic layer containing such surface-treated ferromagnetic particles.

PROCESS FOR PRODUCING SURFACE-TREATED

FERROMAGNETIC PARTICLES AND

MAGNETIC RECORDING MEDIUM USING SUCH PARTICLES

BACKGROUND OF THE INVENTION

1. Field of the Invention:

The present invention relates to a process for producing surface-treated ferromagnetic particles suitable for use in high-density recording. The invention also relates to a magnetic recording medium using such magnetic particles.

2. Description of the Prior Art:

Conventional magentic recording media such as audio tape and video tape comprise non-magnetic bases such as polyethylene terephthalate coated with mixtures of ferromagnetic particles and binders such as vinyl chloride/vinyl acetate copolymer, cellulosic resins, epoxy resins and polyurethane resins. These binders used individually or in combination are unable to disperse the ferromagnetic particles thoroughly and uniformly, and the resulting magnetic recording medium does not have completely satisfactory surface properties and wear resistance. For video tape that requires recording at shorter wavelengths, a poor dispersion of ferromagnetic particles in the magnetic layer reduces not only the S/N ratio but also the sensitivity. Furthermore, due to repeated rubbing of the tape against the magnetic head in recording and reproduction modes, the magnetic coat wears and the ferromagnetic particles in that coat easily shed off and build up on the head.

Many compounds have been proposed as additives that improve the dispersibility of ferromagnetic particles or increase the wear resistance of the magnetic coat. For example, Japanese Patent Publications Nos. 18064/66, 186/68, 669/68, 15624/72, Japanese Patent Applications (OPI) Nos. 53402/74, 58804/74, 84405/74, 40904/76 and 70811/77 (the symbol OPI as used herein means an unexamined published Japanese patent application) prepare a magnetic paint containing ferromagnetic particles and a binder, incorporate in the paint higher aliphatic acids, aliphatic acid amides, alipahtic acid esters, higher alcohols, metal soaps, sulfate esters of higher alcohols, polyethylene oxide or lecithin, and applying the resulting magnetic paint onto a non-magnetic base to produce a magnetic recording medium. However, even these additives do not always ensure the production of magnetic recording media having the desired characteristics. For one thing, these additives cannot be used in a great amount without decreasing the mechanical strength of the magnetic layer. The additives gradually ooze out of the magnetic layer, and this phenomenon, generally called "blooming", must be prevented in order to keep the recording medium for an extended period. Furthermore, the magnetic characteristics of the magnetic layer and
the dispersibility of the ferromagnetic particles are
far from being completely satisfactory.

The technique of treating the surface of ferromagnetic particles with a surfactant has been proposed
in order to increase the dispersibility of the ferromagnetic particles without causing "blooming".
According to the method described in Japanese Patent
Publication No. 1048/82, an lipophilic surfactant such
as lecithin is added to an organic solvent such as
methyl ethyl ketone or toluene, and after dispersing
ferromagnetic particles in the resulting solution, the
particles with the coat of surfactant are filtered,
dried first with air, and then in vacuum. When the
ferromagnetic particles that have been given the surface
treatment by this method are used, no "blooming" will
occur in the final magnetic recording medium, but on
the other hand, the dispersibility of the magnetic
particles is far from being completely satisfactory.

SUMMARY OF THE INVENTION

Therefore, the objects of the present invention
are to provide a new process for producing surface-
treated ferromagnetic particles and to present a new
magnetic recording medium using these particles. The specific objects are listed below.

One object is to provide a process for producing surface-treated ferromagnetic particles having high dispersibility.

Another object is to provide a magnetic recording medium having high wear resistance.

Still another object is to provide a magnetic recording medium having long-term stability.

A further object is to provide a magnetic recording medium having good S/N ratios.

A sitll further object is to provide a magnetic recording medium having high reproduction output.

The first-mentioned object of the present invention can be achieved by a process for producing surface-treated ferromagnetic particles by dispersing ferromagnetic particles in an electrolytic solution and then treating said particles with a surfactant having electric charges of a polarity opposite to that of the charges on the surfaces of said particles. In a preferred embodiment, the electrolytic solution having the ferromagnetic particles dispersed therein is treated with a solution of said surfactant in a hydrophilic solvent, and a hydrophobic solvent is added to the so-treated solution to transfer the ferromagnetic particles into the layer of the hydrophobic solvent for their recovery. In another preferred embodiment, the electrolytic solution having the ferromagnetic particles dispersed therein is treated with a solution of said surfactant in a hydrophobic solvent so as to trnasfer the ferromagnetic particles into the layer of the hydrophobic solvent for their recovery.

The second to fifth objects of the present invention can be attained by a magnetic recording medium which has formed on a non-magnetic base a magnetic layer containing the surface-treated ferromagnetic particles prepared by dispersing ferromagnetic particles in an electrolytic solution and then treating said particles with a surfactant having electric charges of a polarity opposite to that of the charges on the surfaces of said particles. In a preferred embodiment, said electrolytic solution having the ferromagnetic particles dispersed therein is treated with a solution of said surfactant in a hydrophilic solvent, and a hydrophobic solvent is added to the so-treated solution to transfer said ferromagnetic particles into a layer of said hydrophobic solvent for their recovery. In another preferred embodiment, the layer of the hydrophobic solvent into which the surface-treated ferromagnetic particles have been transferred to form a dispersion is further mixed with a binder, and the resulting mixture is applied to the non-magnetic base to thereby from a magnetic layer. In still another preferred embodiment, the electrolytic solution having the ferromagnetic particles dispersed therein is treated with a solution of said surfactant in a hydrophobic solvent so as to transfer the ferromagnetic particles into the layer of the hydrophobic solvent for their recovery. In a further preferred embodiment, the layer of the hydrophobic solvent into which the surface-treated ferromagnetic particles have been transferred to form a dispersion is subsequently mixed with a binder, and the resulting mixture is applied to the non-magnetic base to form a magnetic layer.

## DETAILED DESCRIPTION OF THE PREFERRED EMBODIMENTS

There are two types of electrolytes that can be used in the present invention: one is of the type that charges the surface of the ferromagnetic particles negatively, and the other type charges them positively. Examples of the first type of electrolytes are NaOH, KOH, $Na_3PO_4$, $Na_4P_2O_7$, $Na_4P_4O_{12}$, $Na_2SiO_3$, $Na_4SiO_4$, $Na_2WO_4$, $K_3PO_4$, $K_4P_2O_7$, $K_4P_4O_{12}$, $K_2SiO_3$, $K_4SiO_4$ and $K_2WO_4$. Examples of the second type include $AlCl_3$, $FeCl_3$ and $TiCl_4$. The concentration of the electrolyte solution varies with the type of the electorlyte and the isoelectric point of the ferromagnetic particles. In order to charge the ferromagnetic particles positively, the electrolyte is dissolved in a concentration that provides a pH lower than the isoelectric point of the ferromagnetic particles. For charging the ferromagnetic particles negatively, the electrolyte is dissolved in a concentration which is so controlled as to provide a pH higher than the isoelectric point of the magnetic particles. The electrolyte solution is used in an amount of 20 ml to 5,000 ml, preferably from 50 ml to 2,000 ml, per 100 g of the ferromagnetic particles.

According to the present invention, the ferro-magentic particles are dispersed in the electrolytic solution by a ball mill, sand grinder, high-speed impeller disperser, high-speed mixer or a homogenizer. When the ferromagnetic particles are dispersed in the

- 7 -

electrolytic solution, shearing force will work effectively to reduce the proportion of agglomerating ferromagnetic particles.

In most cases, water is a satisfactory solvent for making the electrolytic solution, but if necessary, various hydrophilic organic solvents may be used. Suitable examples are alcohols such as straight chain or branched chain alcohols having 1 to 8 carbon atoms, alcohol ethers and polyhydric alcohols (e.g. methanol, ethanol, ethoxyethanol and ethylene glycol); ketones having 3 to 6 carbon atoms (e.g. acetone and methyl ethyl ketone); hydrophilic ethers such as tetrahydrofuran and dioxane; and nitrogen-containing hydrophilic solvents such as N-methylpyrrolidone, dimethylformamide, dimethylacetamide and pyridine. These solvents are used in an amount of not more than 50 parts by weight, preferably not more than 20 parts by weight, per 100 parts by weight of water. An aqueous solutoin of electorlyte is particularly preferred.

Ferromagnetic metal particles easily corrode if their surface is charged positively, so an electrolyte of the first type that provides negative charges is preferred if ferromagnetic metal particles are used. For ferromagnetic particles made of metallic compounds, either type of electrolytes may be used.

A wide variety of ferromagnetic particles may be used in the present invention and they include those which are made of metallic compounds such as $\gamma-Fe_2O_3$, $Fe_3O_4$, Co-containing $\gamma-Fe_2O_3$, Co-containing $Fe_3O_4$ and $CrO_2$; metals such as Fe and Co; and alloys thereof.

After the ferromagnetic particles are dispersed in the electrolytic solution, they are treated with a surfactant having electric charges of a polarity opposite to that of the charges on the surface of the ferromagnetic particles. Therefore, if the electrolyte is of the type that charges the surface of the electromagnetic particles negatively, a cationic surfactant is used, and if the electrolyte is of the type that charges the surface of the ferromagnetic particles positively, an anionic surfactant is used.

The combination of two techniques, i.e. dispersing the ferromagnetic particles in the electrolytic solution and the subsequent treatment of the charged ferromagnetic particles with a surfactant having charges of an opposite polarity, is believed to help form a stable layer of the surfactant adsorbed onto the surface of the ferromagnetic particles, which are thereby given the desired high dispersibility. Much lower dispersibility was accomplished when the ferromagnetic particles were treated in other manners, i.e. they were first charged negatively and then treated with an anionic surfactant, or they were first charged positively and then treated with a cationic surfactant.

Illustrative cationic surfactants include quaternary ammonium salts, ammonium salts of higher alkylamines, nitrogen-containing heterocyclic compounds such as pyridine, as well as ammonium salts, phosphonium salts and sulfonium salts thereof.

Illustrative anionic surfactants include carboxylic acid salts such as sodium stearate, sodium palmitate, sodium oleate and potassium laurate; carboxylic acid salts having an ether bond such as sodium cetyloxyacetate and sodium p-decylphenoxyacetate; carboxylic acid salts having an amide bond such as sodium dodecylsulfonamideacetate and potassium cetylsulfonamideacetate; carboxylic acid salts having an amino group such as sodium laurylaminoacetate and sodium decylaminopropionate; carboxylic acid salts having an ester bond such as sodium salt of monoester of dodecyl alcohol and phthalic acid; salts of esters of aliphatic alcohols and sulfuric acid such as sodium stearylalcohol sulfate and ammonium laurylalcohol sulfate; sulfate salts of polyethylene glycol ethers such as sodium lauryl polyethylene glycol ether sulfate and sodium p-octylphenyl polyethylene glycol ether sulfate; sulfate ester salts having an amide bond such as sodium stearamideethanol sulfate and sodium p-octylbenzamideethanol sulfate; sulfate ester salts having an ester bond such as sodium butyl sulfooleate; sulfonate salts such as sodium cetylsulfonate and sodium p-decylbenzenesulfonate; sulfonate salts having a hydroxyl group such as sodium β-hydroxydodecyl-sulfonate; sulfonate salts having an ester bond such as sodium isopropyl α-sulfostearate and sodium bis-2-ethylhexyl sulfosuccinate; sulfonate salts having an amide bond such as sodium butylamide α-sulfolaurate; sulfonate salts having a cyano group such as sodium α-cyanoacetylsulfonate; sulfonate salts having an amino group such as sodium salt of N-tetradecyltaurine; sulfonate salts having an ether bond such as β-dodecyloxyethyl sulfonate; sulfonate salts having a sulfide bond such as sodium laurylthiomethanesulfonate; and phosphate ester salts such as dodecyl alcohol phosphate monoester disodium and decylalcohol phosphate diester monosodium.

These surfactants are used in an amount of 0.05 to 50 parts by weight, preferably 0.1 to 10 parts by weight, per 100 parts by weight of the ferromagnetic particles. If the content of these surfactnats is less than 0.05 part by weight, their effect is not fully exhibited, and if their content is more than 50 parts by weight, emulsification occurs.

These surfactants may be used with water alone. Instead, they may be mixed with one of the hydrophilic solvents described in connection with the electrolytic solution. Alternatively, the surfactants may be mixed with solvents containing one of these hydrophilic solvents and water in any desired proportions.

The surfactants listed above may be used in the form of a solution in a hydrophobic organic solvent such as hexane, heptane, carbon tetrachloride, methylene chloride, benzene or toluene.

When the surfactants according to the present invention are used in the form of a solution in water or one of the hydrophilic solvents mentioned above, 70 to 99 parts by weight of the solvent is preferably used for 1 to 30 parts by weight of the surfactant. Therefore, if 5 parts by weight of the surfactant is to be used per 100 parts by weight of ferromagnetic particles, 50 parts by weight of a 10 wt% solution of the surfactant (a mixture of 90 parts by weight of water and/or a suitable hydrophilic solvent and 10 parts by weight of the surfactant) may be used. Alternatively, 20 ml to 5,000 ml, preferably from 50 ml to 2,000 ml of a solution having the surfactant dissolved in a hydrophilic solvnet (e.g. methanol, ethanol or aceton) may be used per 100 g of the ferromagnetic particles.

If the surfactant according to the present invention is used in the form of a solution in one of the hydrophobic solvents, the composition of the solution is such that 1 to 30 parts by weight of the surfactant is dissolved in 70 to 1,000 parts by weight of the hydrophobic solvent. Therefore, if 5 parts by weight of the surfactant is to be used per 100 parts by weight of ferromagnetic particles, 250 parts by weight of a 2 wt% solution of the surfactant may be used.

The ferromagnetic particles, surfactant, hydrophilic solvent and/or water, and hydrophobic solvent may be used in various proportions as defined above.

The surfactant used in the present invention may be either cationic or anionic, but cationic surfactants are preferred because, as already mentioned, electrolytes that charge the ferromagnetic particles surfaces negatively are preferred for the purposes of the present invention.

According to the present invention, ferromagnetic particles are first dispersed in a solution of the electrolyte described above and then, the resulting dispersion is treated with a surfactant having electric charges of a polarity opposite to that of the charges on the surfaces of the ferromagnetic particles. Here, there are two concrete means of adding the surfactant to said dispersion as follows: 1) the surfactant is added directly to the dispersion or is added in the form of an aqueous and/or hydrophilic solution, and 2) the surfactant is added in the form of a hydrophobic solution.

In case 1) above, for subsequently obtaining the surface-treated ferromagnetic particles according to the present invention, either one of the following two processes is selected: a) the so-treated dispersion is filtered and the residue is dried, and b) a hydrophobic solvent is added to the said so-treated dispersion (the resulting dispersion naturally separates into two layers, a hydrohpobic solvent layer and an aqueous and/or hydrophilic solution layer, and the surface-treated ferromagnetic particles are transferred into the hydrophobic solvent layer), then the hydrophobic solvent layer is separated from the aqueous and/or hydrophilic solution layer and filtered and the residue is dried.

In case 2) above, the hydrophobic solvent layer is separated from the aqueous and/or hydrophilic solution layer in the same manner as in process b) above and filtered and the residue is dried, whereby the surface-treated ferromagnetic particles according to the present invention can be obtained.

Suitable hydrophobic solvents include straight-chain or branched-chain aliphatic hydrocarbons having 5 to 14 carbon atoms, alicyclic hydrocarbons having 5 to 11 carbon atoms, substituted (preferably halogen- or alkyl-substituted) or unsubstituted aromatic hydrocarbons having 6 to 18 carbon atoms, cyclic or noncyclic ketones having 4 to 10 carbon atoms, and aliphatic hydrocarbons containing at least one halogen atom having 1 to 10 carbon atoms. Among these hydrocarbons, those having solubility parameter (SP) values of 7.0 or more but less than 10.0 at 25°C are preferred.

Because of ease of handling and separation from the aqueous layer, the aliphatic hydrocarbons, alicyclic hydrocarbons, aromatic hydrocarbons, and halogen-containing aliphatic hydrocarbons defined above are preferred, and the first three groups of hydrocarbons are particularly preferred. Specific examples of the preferred hydrophobic solvents are pentane, hexane, heptane, octane (these four solvents may be straight-chain or branched-chain), cyclopentane, cyclohexane, cycloheptane, cyclooctane, benzene, toluene, xylene, carbon tetrachloride, chloroform and methylene chloride. These hydrophobic solvents may be used either alone or in combination. The amount of the hydrohpobic solvents vary with their type, and generally they are used in an amount of 20 ml to 5,000 ml, preferably from 50 ml to 2,000 ml, per 100 g of the ferromagnetic particles.

Upon addition of these hydrophobic solvents, the electrolytic solution treated with a surfactant separates into an hydrophobic solvent layer (a hydrophobic liquid layer) and an aqueous layer (a hydrophilic liquid layer). Those ferromagnetic particles the surface of which has been rendered adequately hydrophobic migrate into the hydrophobic solvent layer, whereas those which have not been rendered fully hydrophobic are left in the aqueous layer. Therefore, by removing the aqueous layer, a dispersion that selectively contains the ferromagnetic particles whose surface has been rendered adequately hydrophobic can be obtained and this is characterized by a uniform dispersion of the surface-treated ferromagnetic particles.

A detailed description of the good dispersibility or the surface-treated ferromagnetic particles prepared according to the process of the present invention will be found in the Examples, but suffice it to say here that one measure for the dispersibility of the ferromagnetic particles is sedimentation velocity of the ferromagnetic particles in n-hexane.

The good dispersibility of the surface-treated ferromagnetic particles and the dispersion of such particles is of great help in preparing a magnetic paint that is characterized by a good dispersion of ferromagnetic particles and hence is particularly suitable for use in the production of magnetic recording media. Other fields that may benefit from the good dispersibility of the surface-treated ferromagnetic particles are those of magnetic fluids and pigments.

The sedimentation velocity of ferromagnetic particles in n-hexane is expressed by the depth in millimeters of a suspension of the particles (1 g) formed below the surface of n-hexane which has been left to stand for 24 hours after 1-minute shaking in a sedimentation tube having an inside diameter of 10 mm and an inner capacity of 30 ml. The ferromagnetic particles are said to have good dispersibility if their sedimentation velocity is between 0 and 100 mm, preferably between 0 and 10 mm.

The sedimentation velocity of ferromagnetic particles may be considered as indicating the degree of agglomeration of the ferromagnetic particles (the lower the sedimentation velocity, the smaller the proportion of the agglomerating particles). Another index for the dispersibility of the ferromagnetic particles is how hydrophobic their surface is. This can be measured by suspending the ferromagnetic particles in several solutions (e.g. mixed solvent of water and methanol) having known values of surface tension and seeing if they float or are slightly dispersed in any of the solutions tested. The surface tension of the solution on which the particles float or in which they are slightly dispersed is taken as the degree of hydrophobicity of the particles, and the smaller the degree of hydrophobicity, the higher the dispersibility of the ferromagnetic particles (in this case, the dispersibility under hydrophobic conditions).

The present inventors confirmed that the ferromagnetic particles whose surface was treated by the method of the present invention had a very good dispersibility whether it was evaluated in terms of sedimentation velocity or degree of hydrophobicity.

The resulting surface-treated ferromagnetic particles are mixed and dispersed in a suitable solvent together with a binder so as to form a magnetic paint.

- 17 -

The magnetic paint is then applied onto a non-magnetic base to form a magnetic recording medium having the desired magnetic layer. The dispersion of the surface-treated ferromagnetic particles according to the present invention may be concentrated, dried and mixed with a binder to form a magnetic paint, which is again spread onto a non-magnetic base. By this method, too, a magnetic recording medium having the desired magnetic layer can be produced.

Whichever method is used, the resulting magnetic paint may contain a dispersant, lubricant, abrasive, antistatic agent or any other necessary additive. For further details of the method of preparing magnetic paints, see Japanese Patents No. 15/60, No. 26794/64, No. 186/68, No. 28043/72, No. 28045/72, No. 28046/72, No. 28048/72, No. 31445/72, No. 11162/73, No. 21331/73 and No. 33683/73; German Patent Applicatoin (OLS) No. 2060655; and Russian Patent No. 308033.

A binder is incorporated in the magnetic layer of the magnetic recording medium of the present invention, and any known thermoplastic resins, thermosetting or reactive resins, resins that cure upon irradiation with electron beams, as well as mixtures of these resins may be used as the binder.

Suitable thermoplastic resins have a softening point of less than 150°C, an average molecular weight of about 10,000 to 200,000, and a degree of polymerization of about 200 to 2000. Examples of such polymers are vinyl chloride/vinyl acetate copolymer, vinyl chloride/ vinylidene chloride copolymer, vinyl chloride/acrylonitrile copolymer, acrylic acid ester/acrylonitrile copolymer, acrylic acid ester/vinylidene chloride copolymer, acrylic acid ester/styrene copolymer, methacrylic acid ester/acrylonitrile copolymer, methacrylic acid ester/vinylidene chloride copolymer, methacrylic acid ester/styrene copolymer, urethane elastomer, polyvinyl fluoride, vinylidene chloride/acrylonitrile copolymer, butadiene/acrylonitrile copolymer, polyamide resin, polyvinyl butyral, cellulose derivative (e.g. cellulose acetate butyrate, cellulose diacetate, cellulose triacetate, cellulose propionate, or nitrocellulose), styrene/butadiene copolymer, polyester resin, chloro- vinyl ether/acrylic acid ester copolymer, amino resins, various synthetic rubber thermoplastic resins and mixtures thereof.

Specific examples of these resins are given in Japanese Patent Publications Nos. 6877/62, 12528/64, 19282/64, 5349/65, 20907/65, 9463/66, 14059/66, 16985/66, 6428/67, 11621/67, 4623/68, 15206/68, 2889/69, 17947/69, 18232/69, 14020/70, 14500/70, 18573/72, 22063/72, 22064/ 72,22068/72, 22069/72, 22070/72, and 27886/73, as well as U.S. Patents Nos. 3,144,352, 3,419,420, 3,499,789 and 3,713,887.

The thermosetting or reactive resin is such that it has a molecular weight of less than 200,000 when it is in coating solution and that after application and drying of a coating solution, its molecular weight is increased infinitely due to condensation, addition or other reactions. Preferred thermosetting or reactive resins are those which do not soften or melt until they are decomposed with heat. Specific examples are phenolic resins, epoxy resins, polyurethane curable resin, urea resin, melamine resin, alkyd resin, silicone resin, acrylic reactive resin, a mixture of high-molecular weight polyester resin and isocyanate prepolymer, a mixture of methacrylic acid salt copolymer and diisocyanate prepolymer, a mixture of polyester polyol and polyisocyanate, urea-formaldehyde resin, low-molecular weight glycol/high-molecular weight diol/triphenylmethane triisocyanate mixture, polyamine resins and mixtures thereof.

Specific examples of these resins are found in Japanese Patent Publications Nos. 8103/64, 9779/65, 7192/66, 8016/66, 14275/66, 18179/67, 12081/68, 28023/69, 14501/70, 24902/70, 13103/71, 22067/72, 22072/72, 22073/72, 28045/72, 28048/72 and 28922/72, as well as U.S. Patents Nos. 3,144,353, 3,320,090, 3,437,510, 3,597,273, 3,781,210 and 3,781,211.

Illustrative resins that cure upon irradiation with electron beams include unsaturated prepolymers such as maleic anhydride type, urethane acrylic type, epoxy acrylic type, polyester acrylic type, polyether acrylic type, polyurethane acrylic type and polyamide acrylic type, as well as polyfunctional monomers such as ether acrylic type, urethane acrylic type, epoxy acrylic type, phosphate ester acrylic type, aryl type and hydrocarbon type.

The above listed binders may be used either alone or in combination with themselves or other additives.

The binder is used in an amount of 10 to 400 parts by weight, preferably 30 to 200 parts by weight, per 100 parts by weight of the surface-treated ferromagnetic particles of the present invention. If the binder is used in an excessive amount, the resulting magnetic recording medium has a low recording density, and if the binder content is too low, a weak magnetic layer which is less durable and sheds off easily is formed.

In order to produce a highly durable magnetic recording medium, various curing agents may be incorporated in the magnetic layer, and a polyisocyanate is a suitable curing agent. Illustrative polyisocyanates are addition products of diisocyanate and trivalent polyols, diisocyanate pentamers, and decarboxylation products of 3 mols of diisocyanate and water. More specifically, suitable curing agents include an adduct of 3 mols of tolylene diisocyanate and 1 mol of trimethylolpropane, an adduct of 3 mols of metaxylylene diisocyanate and 1 mol of trimethylolpropane, a tolylene diisocyanate pentamer, a pentamer made of 3 mols of tolylene diisocyanate and 2 mols of hexamethylene diisocyanate, and a decarboxylation product prepared by reacting 3 mols of hexamethylene diisocyanate and 1 mol of water. All of these compounds can easily be produced on an industrial scale.

Besides the surface-treated ferromagnetic particles, the binder and curing agent described above, the magnetic layer may contain other additives such as dispersants, lubricants, abrasives and antistatic agents.

Examples of the dispersant are aliphatic acids having 8 to 18 carbon atoms ($R_1$COOH wherein $R_1$ is a saturated or unsaturated alkyl group having 7 to 17 carbon atoms) caprylic acid, capric acid, lauric acid, myristic acid, palmitic acid, stearic acid, oleic acid, elaidic acid, linoleic acid and linolenic acid. Metal soaps made of alkali metals (Li, Na, K. etc.) or alkaline earth metals (Mg, Ca, Ba, etc.) of these aliphatic acids, as well as lecithins may also be used as the dispersant. Higher alcohols having 12 or more carbon atoms, as well as sulfate esters of these alcohols are also usable. Also usable are the surfactants that have been described in connection with the production of the surface-treated ferromagnetic particles of the present invention or their dispersion. These dispersants and those listed above may be used either individually or in admixture in an amount of 0.1 to 20 parts by weight for 100 parts by weight of the binder. Illustrative dispersants are given in Japanese Patent Publications Nos. 28369/64, 17945/69 and 15001/73, U.S. Patents Nos. 3,587,993 and 3,470,021.

Examples of the lubricant are silicone oil, carbon black, graphite, carbon black graphite polymer, molybdenum disulfide, tungsten disulfide, and "waxes", or aliphatic acid esters of monobasic aliphatic acids having 12 to 16 carbon atoms and monovalent alcohols having carbon atoms whose number as added to the number of carbon atoms in the aliphatic acids is 21 to 23. These lubricants are used in an amount of 0.2 to 20 parts by weight for 100 parts by weight of the binder. Illustrative lubricants are given in Japanese Patent Publications Nos. 23889/68 and 81543/68; U.S. Patents Nos. 3,470,021, 3,492,235, 3,497,411, 3,523,086, 3,625,760, 3,630,772, 3,634,253, 3,642,539, and 3,687,725; IBM Technical Disclosure Bulletin Vol. 9, No. 7, page 779, December 1966; and ELECTRONIK, No. 12, page 380, 1961.

Common abrasives may be used in the present invention, and they include fused alumina, silicon carbide, chromium oxide ($Cr_2O_3$), corundum, artificial corundum, diamond, artificial diamond, garnet, and emery (main components: corundum and magnetite). These abrasives have an average particle size of 0.05 to 5 μ, and a 0.1 to 2 μ range is particularly preferred. They are used in an amount of 1 to 20 parts by weight per 100 parts by weight of the binder. For more details of these abrasives, see Japanese Patent Application (OPI) No. 115510/74; U.S. Patents Nos. 3,007,807, 3,041,196 and 3,687,725; British Patent No. 1,145,349; and German Patent (DT-PS) No. 853,211.

Suitable antistatic agents are fine particles of an electrically conductive material such as graphite, carbon black, or carbon black grafite polymer; a natural surfactant such as saponin; a nonionic surfactant such as alkylene oxide, glycerin or glycidol; a cationic surfactant such as higher alkylamines, quaternary ammonium salts, heterocyclic compounds (e.g. pyridine), and phosphonium or sulfoniums; an anionic surfactant containing an acidic group such as carboxylic acid group, sulfonic acid group, phosphoric acid group, sulfate ester group or phosphate ester group; and an amphoteric surfactant such as amino acids, aminosulfonic acids, and sulfate or phosphate esters of aminoalcohol.

For more detailed information on the surfactants that can be used as antistatic agents, see the following patents and monographs: U.S. Patents Nos. 2,271,623, 2,240,472, 2,288,226, 2,676,122, 2,676,924, 2,676,975, 2,691,566, 2,727,860, 2,730,498, 2,742,379, 2,739,891, 3,068,101, 3,158,484, 3,201,253, 3,210,191, 3,294,540, 3,415,649, 3,441,413, 3,442,654, 3,475,174, and 3,545,974; German Patent Application (OLS) No. 1,942,665; British Patents Nos. 1,077,317, 1,198,450; "Synthesis of Surfactants and Their Applications" by Ryohei Oda et al., Maki Shoten, 1964; A.W. Pailey: "Surface Active Agents", Interscience Publication Incorporated, 1958; T.P. Shisley: "Encyclopaedia of Surface Active Agents", vol. 2, Chemical Publish Company, 1964; "Handbook of Surfactants", 6th printing, Sangyo Tosho K.K., December 20, 1966. Also usable are the surfactants that have been described in connection with the production of the surface-treated ferromagnetic particles of the present invention or their dispersion.

These surfactants may be used either individually or in combination. They are generally used as antistatic agents, but they may be used for other purposes such as increasing the dispersibility of ferromagnetic particles, improving the magnetic characteristics, improving the lubricity of the magnetic particles, or as coating aids.

Various solvents may be used for preparing a magnetic paint or as an aid to the application of the magnetic paint. Suitable solvents include ketones such as acetone, methyl ethyl ketone, methyl isobutyl ketone and cyclohexanone; alcohols such as methanol, ethanol, propanol and butanol; esters such as methyl acetate, ethyl acetate, butyl acetate, ethyl lactate, and glycol acetate monoethyl ehter; glycol ehters such as glycol dimethyl ether, glycol monoethyl ether and dioxane; aormatic hydrocarbons such as benzene, toluene and xylene; chlorinated hydrocarbons such as methylene chloride, ethylene chloride, carbon tetrachloride, chloroform, and dichlorobenzene.

Suitable non-magnetic bases include polyesters such as polyethylene terephthalate and polyethylene-2,6-naphthalate; polyolefins such as polypropylene; cellulose derivatives such as cellulose triacetate and diacetate; plastics such as polycarbonate; non-magnetic metals such as aluminum, copper, and zinc; and ceramics such as glass, porcelian and earthenware.

The thickness of these non-magnetic bases varies with their physical shape. For films and sheets, the thickness is between about 3 and 100 μm, preferably from 5 to 50 μm; for disks and cards, the thickness ranges from about 30 μm to 10 mm. The bases may be in a cylindrical drum shape whose specific configuration is determined by the type of the recorder with which the magnetic recording medium of the present invention is used.

The back surface (opposite the side having the magnetic coating) of the base may be provided "Backcoat" layer for various purposes, e.g. prevention of electrification and transfer.

For detailed information on the technique of forming the backcoat, see U.S. Patents Nos. 2,804,401, 3,293,066, 3,617,378, 3,062,676, 3,734,772, 3,476,596, 2,643,048, 2,803,556, 2,887,462, 2,923,642, 2,997,451, 3,007,892, 3,041,196, 3,115,420, and 3,166,688.

The non-magnetic base may be in the form of a film, tape, sheet, disc, card, drum or other suitable shapes, and a suitable material is selected from among various materials depending on its form.

The surface-treated ferromagnetic particles according to the present invention or their dispersion, as well as the binder, dispersant, lubricant, abrasive, antistatic agent and solvent are mixed to form a magnetic paint. The magnetic paint is prepared by charging a kneading machine with the surface-treated ferromagnetic particles or their dispersion and all other ingredients simultaneously or sequentially. For instance, the ferromagnetic particles are added to a solution containing the dispersant, and the mixture is stirred for a predetermined period, and then, the other ingredients are added under stirring.

Various kneading machines may be used to achieve thorough mixing of the magnetic paint composition. Examples are a two-roll mill, three-roll mill, ball mill, pebble mill, sand grinder, Szegvari attritor, high-speed impeller disperser, high-speed stone mill, high-speed impact mill, disperkneader, high-speed mixer, homogenizer and ultrasonic disperser.

The magnetic paint prepared according to this method is characterized by a highly uniform dispersion of the ferromagnetic particles, and when their dispersibility was evaluated by the method described in the Examples that are given later in this specification, much fewer agglomerates were observed under electron microscope than in the case of the conventional magnetic paint.

For details of the kneading and dispersing technique, see T.C. Patton, "Paint Flow and Pigment Dispersion", John Wiley & Sons, (1964), as well as U.S. Patents Nos. 2,581,414 and 2,855,156.

A magnetic layer is formed from the magnetic paint on a base by air doctor coating, blade coating, air knife coating, squeeze coating, impregnate coating, reverse roll coating, transfer roll coating, gravure coating, kiss coating, cast coating, spray coating, and others. For details of these and other coating techniques, see "Coating Kogaku (Coating Engineering)", published by Asakura Shoten, March 20, 1971, pp. 253-277.

The magnetic layer thus formed on the base is dried after the ferromagnetic particles in the layer optionally oriented in magnetic field. If necessary, the web with the magnetic layer may be slit into a shape desired for the final magnetic recording medium. For the magnetic orientation, an A.C. or D.C. magnetic field having about 500 to 3,000 Gauss is preferred. The web is subsequently dried preferably at a temperature between about 50 and 100°C for a period of about 3 to 10 minutes. Other methods suitable for use in the present invention to orient the ferromagnetic particles magnetically are found in various patents such as U.S. Patents Nos. 1,949,840, 2,796,359, 3,001,891, 3,172,776, 3,416,949, 3,473,960, and 3,681,138; Japanese Patent Publications Nos. 3427/57, 28368/64, 23624/65, 23625/65, 13181/66, 13043/73 and 39722/73.

All of the magnetic recording media prepared by the above described method of the present invention had much greater resistance to wear and longer stability than the conventional product. They also had far better S/N ratios and greater reproduction output than the conventional product. This shows the adaptability to high-density recording of the magnetic recording medium of the present invention.

The present invention is hereunder described in greater detail by reference to working examples which are given here for illustrative purposes only. It will be readily understood by those skilled in the art that the compositions of magnetic recording media and the sequence of the steps of preparing the latter may be modified in various manners without departing from the spirit of the present invention. Therefore, the scope of the present invention should not be limited to any of the following examples. And wherein all "parts" means by weight, and the terms "audio tape" and "video tape" are included within the definition of the term "magnetic recording medium" used in the earlier part of the specification.

EXAMPLES 1 to 12

Samples of 100 parts of the ferromagnetic particles listed in Table 1 were dissolved in 1000 parts of $1 \times 10^{-4}$ N solutions of various electrolytes, and uniform dispersions were prepared in a sand grinder.

Table 1

| Sample No. | Magnetic material | Electrolyte | Surface charge on the treated-magnetic particles |
|---|---|---|---|
| 1 | Co-containing $Fe_3O_4$ | $A\ell C\ell_3$ | + |
| 2 | " | $FeC\ell_3$ | + |
| 3 | " | NaOH | − |
| 4 | " | $Na_3PO_4$ | − |
| 5 | Fe | KOH | − |
| 6 | Fe | $K_3PO_4$ | − |

Sample No. 1 containing positively charged ferromagnetic particles was mixed with 50 parts of a 10% aqueous solution of an anionic surfactant sodium dodecyl sulfate (SDS). Sample No. 2 was also mixed with 50 parts of a 10% aqueous solution of an anionic surfactant, but this time, sodium oleate. The respective mixtures were well agitated to form dispersions, which were filtered and dried first with air, then in vacuum, so as to provide samples No. 1 and No. 2 of surface-treated ferromagnetic particles.

Samples Nos. 3 and 5 each containing negatively charged ferromagnetic particles were mixed with 50 parts of a 10% aqueous solution of a cationic surfactant, N-cetyl-N-ethyl morpholinium ethosulfate. Samples Nos. 4 and 6 were also mixed with 50 parts of a 10% aqueous solution of a cationic surfactant, but this time, decyl tributyl ammonium bromide. The respective mixtures were well agitated to form dispersions, which were filtered and dried first with air, then in vacuum, so as to provide samples No. 3 to No. 6 of surface-treated ferromagnetic particles.

Another portion of electrolytic solution sample No. 1 containing positively charged ferromagnetic particles was mixed with 50 parts of a 10% methanol solution of sodium dodecyl sulfate. Another portion of electrolytic solution sample No. 2 also containing positively charged ferromagnetic particles was mixed with 50 parts of a 10% methanol solution of sodium oleate. The respective mixtures were well stirred to form dispersions, which were filtered and dried first with air, then in vacuum, so as to provide samples No. 7 and 8 of surface-treated ferromagnetic particles.

Another portion of electrolytic solution samples Nos. 3 and 5 each containing negatively charged ferromagnetic particles was mixed with 50 parts of a 10% methanol solution of N-cetyl-N-ethyl morpholinium samples Nos. 4 and 6 also containing negatively charged ferromagnetic particles was mixed with 50 parts of a 10% decyl tributyl ammonium bromide. The respective mixtures were well agitated to form dispersions, which were filtered and dried first with air, then in vacuum, so as to provide samples No. 9 to No. 12 of surface-treated ferromagnetic particles.

The basic formulations for preparing the twelve samples of surface-treated ferromagnetic particles are listed in Table 2 below.

Table 2

| Ferromagnetic Particles Sample No. | Magnetic Material | Surfactant Solution |
|---|---|---|
| 1 | Co-containing $Fe_3O_4$ | 10% aqueous sodium dodecyl sulfate |
| 2 | " | 10% aqueous sodium oleate |
| 3 | " | 10% aqueous N-cetyl-N-ethyl morpholinium ethosulfate |
| 4 | " | 10% aqueous decyltributyl ammonium bromide |
| 5 | Fe | 10% aqueous N-cetyl-N-ethyl morpholinium ethosulfate |
| 6 | " | 10% aqueous decyltributyl ammonium bromide |
| 7 | Co-containing $Fe_3O_4$ | 10% sodium dodecyl sulfate in methanol |
| 8 | " | 10% sodium oleate in methanol |
| 9 | " | 10% N-cetyl-N-ethyl morpholinium ethosulfate in methanol |
| 10 | " | 10% decyltributyl ammonium bromide in methanol |
| 11 | Fe | 10% N-cetyl-N-ethyl morpholinium ethosulfate in methanol |
| 12 | " | 10% decyltributyl ammonium bromide in methanol |

EXAMPLES 13 to 24

Electrolytic solution sample No. 1 containing positively charged ferromagnetic particles was mixed with 50 parts of a 10% aqueous solution of an anionic surfactant SDS. Sample No. 2 was also mixed with 50 parts of a 10% aqueous solution of an anionic surfactant, but this time, sodium oleate. The respective mixtures were well stirred to form dispersions, which were mixed with 1,000 parts of hydrophobic organic solvents per 100 parts of the ferromagnetic particles. The resulting mixtures were well stirred to form dispersions. Hydrophobic solvents layers were separated from the dispersions and filtered and dried first with air and then in vacuum so as to provide samples No. 13 and No. 14 of surface-treated ferromagnetic particles.

Electrolytic solution samples No. 3 and No. 5 each containing negatively charged ferromagnetic particles were mixed with 50 parts of a 10% aqueous solution of a cationic surfactant, N-cetyl-N-ethyl morpholinium ethosulfate. Samples No. 4 and No. 6 were also mixed with 50 parts of a 10% aqueous solution of a cationic surfactant, but this time, decyl tributyl ammonium bromide. The respective mixtures were well stirred to form dispersions, which were mixed with 1,000 parts of hydrophobic organic solvents per 100 parts of the fereromagnetic particles. The resulting mixtures were well stirred to form dispersions. Hydrophobic solvents layers

- 34 -

were separated from the dispersions and filtered and dried first with air, then in vacuum, so as to provide samples No. 15 to No. 18 of surface-treated ferromagnetic particles.

Another portion of electrolytic solution sample No. 1 containing positively charged ferromagnetic particles was mixed with 50 parts of a 10% solution of sodium dodecyl sulfate in a 1:1 mixture of methanol and water. Another portion of electrolytic solution sample No. 2 containing positively charged ferromagnetic particles was mixed with 50 parts of a 10% methanol solution of sodium oleate. The respective mixtures were well stirred to form dispersions, which were mixed with 1,000 parts of hydrophobic organic solvents per 100 parts of the ferromagnetic particles. The resulting mixtures were well stirred to form dispersions. Hydrophobic solvents layers were separated from the dispersions and filtered and dried first with air, then in vacuum, so as to provide samples No. 19 and No. 20 of surface-treated ferromagnetic particles.

Another portion of electrolytic solution samples Nos. 3 and 5 each containing negatively charged ferromagnetic particles was mixed with 50 parts of a 10% methanol solution of N-cetyl-N-ethyl morpholinium ethosulfate. Another portion of electrolytic solution samples Nos. 4 and 6 also containing negatively charged ferromagnetic particles was mixed with 50 parts of a 10% solution of decyl tributyl ammonium bromide in a 1:2 mixture of methanol and water. The respective mixtures were well stirred to form dispersions, which were mixed with 1,000 parts of hydrophobic organic solvents per 100 parts of the ferromagnetic particles. The resulting mixtures were well stirred to form dispersions. Hydrophobic solvents layers were separated from the dispersions, filtered and dried first with air, then in vacuum, so as to provide samples No. 21 to No. 24 of surface-treated ferromagnetic particles.

The basic formulations for preparing samples Nos. 13 to 24 of surface-treated ferromagnetic particles are listed in Table 3 below.

Table 3

| Ferromagnetic Particles Sample No. | Magnetic Material | Surfactant Solution | Hydrophobic Organic Solvent |
|---|---|---|---|
| 13 | Co-containing $Fe_3O_4$ | 10% aqueous sodium dodecyl sulfate | n-hexane |
| 14 | " | 10% aqueous sodium oleate | cyclohexane |
| 15 | " | 10% aqueous N-cetyl-N-ethyl morpholinium etho-sulfate | m-xylene |
| 16 | " | 10% aqueous decyltributyl ammonium bromide | toluene |
| 17 | Fe | 10% aqueous N-cetyl-N-ethyl morpholinium ethosulfate | benzene |
| 18 | " | 10% aqueous decyltributyl ammonium bromide | chlorobenzene |
| 19 | Co-containing $Fe_3O_4$ | 10% sodium dodecyl sulfate in 1:1 methanol/water | toluene |
| 20 | " | 10% sodium oleate in methanol | m-xylene |
| 21 | " | 10% N-cetyl-N-ethyl morpholinium ethosulfate in methanol | n-hexane |
| 22 | " | 10% decyltributyl ammonium bromide in methanol | chlorobenzene |
| 23 | Fe | 10% N-cetyl-N-ethyl morpholinium ethosulfate in methanol | benzene |
| 24 | " | 10% decyltributyl ammonium bromide in 1:1 methanol/water | cyclohexane |

## EXAMPLES 25 to 30

Electrolytic solution sample No. 1 containing positively charged ferromagnetic particles was mixed with 300 parts of a 2% toluene solution of an anionic surfactant, sodium eicosyl benzenesulfonate. Sample No. 2 was also mixed with 300 parts of a 2% hexane solution of an anionic surfactant, but this time, sodium stearate. The respective mixtures were well stirred to form dispersions, which were left to stand until they separated into aqueous and organic layers. The aqueous layers were removed and the organic layers were filtered and dried in vacuum to provide samples Nos. 25 and 26 of surface-treated ferromagnetic particles.

Electrolytic solution samples No. 3 and No. 5 each containing negatively charged ferromagnetic particles were mixed with 300 parts of a 2% toluene solution of a cationic surfactant, N-cetyl-N-ethyl morpholinium ethosulfate. Samples No. 4 and No. 6 were also mixed with 300 parts of a 2% hexane solution of a cationic surfactant, but this time, octadecyl tributyl ammonium chloride. The respective mixtures were well stirred to form dispersions, which were left to stand until they separated into aqueous and organic layers. The aqueous layers were removed and the organic layers were filtered and dried in vacuum to provide samples Nos. 27 to 30 of surface-treated ferromagnetic particles.

The basic formulations for preparing the six samples of surface-treated ferromagnetic particles are listed in Table 4 below.

Table 4

| Ferromagnetic Particles Sample No. | Magnetic Material | Surfactant Solution |
|---|---|---|
| 25 | Co-containing $Fe_3O_4$ | 2% sodium eicosylbenzene-sulfonate in toluene |
| 26 | " | 2% sodium stearate in hexane |
| 27 | " | 2% N-cetyl-N-ethyl morpholinium ethosulfate in toluene |
| 28 | " | 2% octadecyltributyl ammonium chloride in hexane |
| 29 | Fe | 2% N-cetyl-N-ethyl morpholinium ethosulfate in toluene |
| 30 | Fe | 2% octadecyltributyl ammonium chloride in hexane |

## COMPARATIVE EXAMPLE 1

A hundred parts of Co-containing $Fe_3O_4$ particles was dispersed in 1,000 parts of pure water rather than in an electrolytic solution. The dispersion was mixed with 50 parts of a 10% aqueous solution of sodium dodecyl sulfate. The resulting mixture was well stirred to form a dispersion, which was filtered and dried first with air, then in vacuum, so as to provide comparative sample No. 1 of surface-treated ferromagnetic particles.

## COMPARATIVE EXAMPLE 2

A hundred parts of Co-containing $Fe_3O_4$ particles was dispersed in 1,000 parts of a toluene solution containing 5 parts of lecithin which was a common dispersant. The resulting dispersion was filtered and dried first with air, then in vacuum, so as to provide comparative sample No. 2 of surface-treated ferromagnetic particles.

## COMPARATIVE EXAMPLE 3

A hundred parts of Fe particles was dispersed in 1,000 parts of a toluene solution containing 5 parts of lecithin. The resulting dispersion was filtered and dried first with air, then in vacuum, so as to provide comparative sample No. 3 of surface-treated ferromagnetic particles.

## COMPARATIVE EXAMPLES 4 AND 5

Non-treated Co-containing $Fe_3O_4$ particles and Fe particles were respectively used as comparative samples No. 4 and No. 5 of ferromagnetic particles.

The surface properties and dispersibility of samples No. 1 to 30 were compared with those of comparative examples No. 1 to No. 5 by measuring their degree of hydrophobicity and sedimentation velocity.

The measurement of the degree of hydrophobicity based on the following principle: when a test sample of ferromagnetic particles floated on a solution containing pure water and methanol in a certain mixing ratio, the surface energy (dyne/cm) of the ferromagnetic particles was smaller than the surface tension (dyne/cm) of the solution, and if the particles were dispersed or sedimented in the solution, the surface energy of the particles was greater than the surface tension of the solution.

The sedimentation velocity of ferromagnetic particles was measured in the following manner: 1) one gram of the magnetic particles was put in a sedimentation tube (inner capacity: 30 ml, inside diameter: 10 mm) and n-hexane was added to make 30 ml; 2) the resulting dispersion was shaken uniformly for one minute and left to stand for 24 hours; 3) the depth the interface of the suspension of the magnetic particles formed below the surface level of the n-hexane solution was measured.

The results of the measurements are listed in Table 5 below.

Table 5

0099259

| Ferromagnetic Particles Sample No. | Degree of Hydrophobicity (dyne/cm) | Sedimentation Velocity (mm/24hr) |
|---|---|---|
| 1 | 25 - 30 | 0 - 2 |
| 2 | 25 - 30 | 0 - 2 |
| 3 | 25 - 30 | 0 |
| 4 | 25 - 30 | 0 - 1 |
| 5 | 39 | 5 |
| 6 | 39 | 5 - 6 |
| 7 | 30 | 2 - 3 |
| 8 | 30 | 2 |
| 9 | 30 | 1 - 2 |
| 10 | 30 | 1 - 2 |
| 11 | 39 | 5 - 6 |
| 12 | 39 | 5 - 6 |
| 13 | 25 | 0 |
| 14 | 25 | 0 |
| 15 | 25 | 0 |
| 16 | 25 | 0 |
| 17 | 39 | 0 - 1 |
| 18 | 39 | 0 - 1 |
| 19 | 25 - 30 | 0 |
| 20 | 25 - 30 | 0 |
| 21 | 25 - 30 | 0 |
| 22 | 25 - 30 | 0 |
| 23 | 30 | 0 - 1 |
| 24 | 30 | 0 - 2 |
| 25 | 25 - 30 | 0 - 3 |
| 26 | 25 - 30 | 0 - 3 |
| 27 | 25 - 30 | 0 - 2 |
| 28 | 25 - 30 | 0 - 2 |
| 29 | 30 - 35 | 4 |
| 30 | 30 - 35 | 5 - 7 |
| Comparative Sample 1 | 45 | 110 |
| 2 | 50 | 120 |
| 3 | 50 | 140 |
| 4 | $\geq 71$ | all particles sedimented |
| 5 | $\geq 71$ | all particles sedimented |

The above data shows that the ferromagnetic particles that were given the surface treatment according to the method of the present invention had great dispersibility under hydrophobic lipophilic conditions as compared with the ferromagnetic particles treated in the conventional manner.

Magnetic paints were prepared from samples No. 1 to No. 24 and comparative samples No. 1 to No. 5 of surface-treated or non-treated ferromagnetic particles according to the following basic formulation.

| | |
|---|---|
| Surface-treated or non-treated ferromagnetic particles | 75 parts |
| Partially hydrolyzed vinyl chloride/vinyl acetate copolymer | 7.5 parts |
| Polyurethane | 7.5 parts |
| Silicone oil | 1.5 parts |
| Methyl ethyl ketone | 70 parts |
| Toluene | 60 parts |
| Cyclohexanone | 5 parts |

The above ingredients were mixed intimately in a ball mill, and were further blended uniformly with 3 parts of tolylene diisocyanate to provide a magnetic paint. Each of the so prepared magnetic paints was applied to one side of a polyethylene terephthalate film (15 μm thick) in a magnetic field so as to form a magnetic layer in a dry thickness of 5 μm. The resulting broad web was super-calendered and slit into video tape samples 12.7 mm wide.

The video tape samples prepared from samples No. 1 to No. 24 of surface-treated ferromagnetic particles were referred to as magnetic tape samples No. 1 to No. 24, and those prepared from comparative samples No. 1 to No. 5 were named comparative video tape samples No. 1 to No.5. The characteristics of these video tape samples are shown in Table 6, wherein Br/Bm represents a squareness ratio which increases as the magnetic characteristics are improved.

Table 6

| Tape Sample No. | Br/Bm | Output up to 4 MHz (mvp-p) (a) | S/N ratio (dB) (b) | Wear resistance (c) | Sticki-ness (d) |
|---|---|---|---|---|---|
| 1 | 0.85 | +180 | +3.5 | good | not sticky |
| 2 | 0.84 | +200 | +3.5 | " | " |
| 3 | 0.87 | +240 | +4.0 | " | " |
| 4 | 0.87 | +220 | +3.5 | " | " |
| 5 | 0.82 | +200 | +3.0* | " | " |
| 6 | 0.83 | +230 | +3.0* | " | " |
| 7 | 0.84 | +150 | +3.5 | " | " |
| 8 | 0.84 | +150 | +4.0 | " | " |
| 9 | 0.86 | +180 | +4.0 | " | " |
| 10 | 0.87 | +200 | +3.5 | " | " |
| 11 | 0.82 | +150 | +3.0* | " | " |
| 12 | 0.81 | +180 | +3.0* | " | " |
| 13 | 0.86 | +200 | +4.0 | " | " |
| 14 | 0.85 | +210 | +4.0 | " | " |
| 15 | 0.87 | +250 | +4.0 | " | " |
| 16 | 0.87 | +240 | +3.5 | " | " |
| 17 | 0.84 | +210 | +3.5* | " | " |
| 18 | 0.84 | +250 | +3.0* | " | " |
| 19 | 0.85 | +170 | +4.0 | " | " |
| 20 | 0.86 | +170 | +4.0 | " | " |
| 21 | 0.87 | +200 | +4.0 | " | " |
| 22 | 0.87 | +210 | +3.5 | " | " |
| 23 | 0.84 | +160 | +3.5* | " | " |
| 24 | 0.83 | +180 | +3.5* | " | " |
| Comparative Sample 1 | 0.82 | +100 | +2.5 | moderate | " |
| 2 | 0.83 | +150 | +2.0 | " | " |
| 3 | 0.80 | +100 | +2.0* | " | " |
| 4 | 0.80 | 0 | 0 | poor | sticky |
| 5 | 0.78 | + 80 | 0* | " | " |

a) Output up to 4 MHz: The RF output at 4 MHz was measured with a VTR deck for RF output measurement and the result was indicated as a relative value, with the output from comparative tape sample No. 4 taken as zero.

b) S/N ratio: Indicated as relative values, with the value of comparative sample No. 4 taken as O dB for tape samples using Co-containing $Fe_3O_4$ as ferromagnetic particles. For tape samples using metallic Fe as ferromagnetic particles, the value of comparative sample No. 5 was taken as O dB. In Table 6 the samples using metallic Fe as ferromagnetic particles are indicated by an asterisk.

c) Wear resistance: A tape sample 5 m long was reciprocally run in contact with a mockup head at a speed of 7 m/sec, and the tape surface was checked for any wear by both visual and microscopic observations.

d) Stickiness: The tape samples were left for 24 hours at 40°C and 80% RH and checked for any stickiness that developed in the samples.

The data in Table 6 shows that the video tape samples prepared according to the present invention were suitable for high-density recording because they had good wear resistance and long-term stability (e.g. absence of stickiness), exhibited high S/N ratios and produced high reproduction output as compared with the conventional product. Tape samples Nos. 1 to 24 were those of video tape, but the present inventors confirmed that similar advantages were obtained when audio tape samples were prepared using the surface-treated ferromagnetic particles according to the present invention.

The magnetic paint compositions used in preparing the tape samples Nos. 1 to 24 and those used in preparing comparative samples Nos. 1 to 5 were spread with an applicator onto glass plates to form magnetic layers having a wet thickness of 60 microns. Under observation with an electron microscope, the magnetic layers prepared from the comparative magnetic paints contained much more agglomerates of ferromagnetic particles than those used in preparing samples Nos. 1 to 24 according to the present invention, and this shows the high uniformity of the ferromagnetic particles dispersed in these magnetic paints.

EXAMPLES 32 to 43

Electrolytic solution sample No. 1 (see Table 1) containing positively charged ferromagnetic particles was mixed with 50 parts of a 10% aqueous solution of an anionic surfactant sodium dodecyl sulfonate (SDS). Sample No.2 was also mixed with 50 parts of a 10% aqueous solution of an anionic surfactant, but this time sodium oleate. The respective mixtures were well stirred to form dispersions, which were mixed with 1,000 parts of hydrophobic organic solvents per 100 parts of the ferromagnetic particles. The resulting mixtures were well stirred to form dispersions. The aqueous layer was removed from them to leave dispersion samples Nos. 32 and 33 of surface-treated ferromagnetic particles.

Electrolytic solution samples Nos. 3 and 5 each containing negatively charged ferromagnetic particles were mixed with 50 parts of a 10% aqueous solution of a cationic surfactant, N-cetyl-N-ethyl morpholinium ethosulfate. Samples Nos. 4 and 6 were also mixed with 50 parts of a 10% aqueous solution of a cationic surfactant, this time, decyltributyl ammonium bromide. The respective mixtures were well stirred to form dispersions, which were mixed with 1,000 parts of hydrophobic organic solvents per 100 parts of the ferromagnetic particles.

The resulting mixtures were well stirred to form dispersions. The aqueous layer was removed from them to leave dispersion samples Nos. 34 to 37 of surface-treated ferromagnetic particles.

Another portion of electrolytic solution sample No. 1 containing positively charged ferromagnetic particles was mixed with 50 parts of a 10% methanol solution of SDS. Another portion of electrolytic solution sample No. 2 was mixed with 50 parts of a 10% methanol solution of sodium oleate. The respective mixtures were well stirred to form dispersions, which were mixed with 1,000 parts of hydrophobic organic solvents per 100 parts of the ferromagnetic particles. The resulting mixtures were well stirred to form dispersions, and the aqueous layer was removed from them to leave dispersion samples Nos. 38 and 39 of surface-treated ferromagnetic particles.

Another portion of electrolytic solution samples Nos. 3 and 5 each containing negatively charged ferromagnetic particles was mixed with 50 parts of a 10% methanol solution of N-cetyl-N-ethyl morpholinium ethosulfate. Another portion of electrolytic solution samples Nos. 4 and 6 also containing negatively charged ferromagnetic particles was mixed with 50% methanol solution of decyltributyl ammonium bromide. The respective mixtures were well stirred to form dispersions, which were mixed with 1,000 parts of hydrophobic organic solvents per 100 parts of the ferromagnetic particles. The resulting mixtures were well stirred to form dispersions, and the aqueous layer was removed from them to leave dispersion samples Nos. 40 to 43 of surface-treated ferromagnetic particles.

The basic formulations for preparing dispersion samples Nos. 32 to 43 are listed in Table 7 below.

Table 7

| Dispersion Sample No. | Magnetic Material | Surfactant Solution | Hydrophobic Organic Solvent |
|---|---|---|---|
| 32 | Co-containing $Fe_3O_4$ | 10% aqueous sodium dodecyl sulfate | methyl isobutyl ketone |
| 33 | " | 10% aqueous sodium oleate | toluene |
| 34 | " | 10% aqueous N-cethyl-N-ethyl morpholinium ethosulfate | cyclohexane |
| 35 | " | 10% aqueous decyl-tributyl ammonium bromide | toluene |
| 36 | Fe | 10% aqueous N-cetyl-N-ethyl morpholinium ethosulfate | cyclohexane |
| 37 | " | 10% aqueous decyl-tributyl ammonium bromide | methyl isobutyl kotone |
| 38 | Co-containing $Fe_3O_4$ | 10% sodium dodecyl sulfate in methanol | cyclohexane |
| 39 | " | 10% sodium oleate in methanol | methyl isobutyl ketone |
| 40 | " | 10% N-cethyl-N-ethyl morpholinium ethosulfate in methanol | toluene |
| 41 | " | 10% decyltributyl ammonium bromide in methanol | toluene |
| 42 | Fe | 10% N-cetyl-N-ethyl morpholinium ethosulfate in methanol | cyclohexane |
| 43 | " | 10% decyltributyl ammonium bromide in methanol | methyl isobutyl ketone |

## COMPARATIVE EXAMPLE 6

A hundred parts of Co-containing $Fe_3O_4$ particles was dispersed in 1,000 parts of pure water rather than in an electrolytic solution. The dispersion was mixed with 50 parts of a 10% aqueous solution of SDS and the resulting mixture was well stirred to form a dispersion. The dispersion was further mixed with 1,000 parts of cyclohexane per 100 parts of the ferromagnetic particles. The resulting mixture was again stirred thoroughly to form a dispersion, from which the aqueous layer was removed to leave comparative dispersion sample No. 6 of the surface-treated ferromagnetic particles.

## COMPARATIVE EXAMPLE 7

A hundred parts of Co-containing $Fe_3O_4$ particles was dispersed in 1,000 parts of a toluene containing 5 parts of lecithin which was a common dispersant. Thus, comparative dispersion sample No. 7 of surface-treated ferromagnetic particles is obtained.

## COMPARATIVE EXAMPLE 8

A hundred parts of Fe particles was dispersed in 1,000 parts of a toluene containing 5 parts of lecithin. Thus, comparative

dispersion sample No. 8 of surface-treated ferromagnetic particles is obtained.

## COMPARATIVE EXAMPLES 9 AND 10

Non-treated Co-containing $Fe_3O_4$ particles were dispersed in 1,000 parts of methyl isobutyl ketone, and the resulting dispersions were referred to as comparative dispersion samples No. 9 and No. 10.

The dispersibility of the ferromagnetic particles in samples Nos. 32 to 43 was compared with comparative samples Nos. 6 to 10 by measuring their sedimentation velocity. The results of the measurement are listed in Table 8 below.

Table 8

| Ferromagnetic Particles Sample No. | Sedimentation Velocity (mm/24hr) |
|---|---|
| 32 | 0 |
| 33 | 0 |
| 34 | 0 |
| 35 | 0 |
| 36 | 0 - 1 |
| 37 | 0 |
| 38 | 0 |
| 39 | 0 - 1 |
| 40 | 0 |
| 41 | 0 |
| 42 | 0 - 1 |
| 43 | 0 |
| Comparative Sample No. 6 | 120 |
| 7 | 120 |
| 8 | 130 |
| 9 | all particles sedimented |
| 10 | " |

The above data shows that the dispersions of ferromagnetic particles prepared by the method of the present invention were characterized by uniform dispersion of the magnetic particles under hydrophobic (lipophilic) conditions as compared with the conventional product.

Dispersion samples Nos. 32 to 43 and comparative dispersion samples 6 to 10 were concentrated and dehydrated with a molecular sieve. After removing the molecular sieve, three solvents (i.e. methyl isobutyl ketone, toluene and cyclohexane) were concentrated or additionally supplied so that their proportions with respect to the ferromagnetic particles complied with the predetermined values indicated below. Thereafter, polyurethane, silicone oil and a partially hydrolyzed vinyl chloride/vinyl acetate copolymer were added in the amounts also indicated below.

| Components | Amounts (in parts) |
|---|---|
| Ferromagnetic particles | 75 |
| Partially hydrolyzed vinyl chloride/vinyl acetate copolymer | 7.5 |
| Polyurethane | 7.5 |
| Silicone oil | 1.5 |
| Methyl isobutyl ketone | 70 |
| Toluene | 60 |
| Cyclohexane | 5 |

The above ingredients were mixed intimately in a ball mill, and were further blended uniformly with 3 parts of tolylene diisocyanate to provide a magnetic paint. Each of the so prepared magnetic paints was applied to one side of a polyethylene terephthalate film (15 μm thick) in a magnetic field so as to form a magnetic layer in a dry thickness of 5 μm. The resulting broad web was super-calendered and slit into video tape samples 12.7 mm wide.

The video tape samples prepared from dispersion samples No. 32 to No. 43 were referred to as magnetic tape samples Nos. 32 to 43, and those prepared from comparative dispersion samples No. 6 to No. 10 were named comparative video tape samples No. 6 to No. 10. The characteristics of these video tape samples are shown in Table 9 below.

| Tape Sample No. | Br/Bm | Output up to 4 MHz (mvp-p) (a) | S/N ratio (dB) (b) | Wear Resistance (c) | Stickiness (d) |
|---|---|---|---|---|---|
| 32 | 0.86 | +210 | +4.0 | good | not sticky |
| 33 | 0.86 | +220 | +4.0 | " | " |
| 34 | 0.88 | +240 | +4.5 | " | " |
| 35 | 0.87 | +250 | +4.0 | " | " |
| 36 | 0.84 | +220 | +4.0* | " | " |
| 37 | 0.85 | +250 | +3.5* | " | " |
| 38 | 0.86 | +170 | +4.0 | " | " |
| 39 | 0.86 | +180 | +4.5 | " | " |
| 40 | 0.87 | +210 | +4.0 | " | " |
| 41 | 0.88 | +220 | +4.0 | " | " |
| 42 | 0.84 | +170 | +3.5* | " | " |
| 43 | 0.84 | +180 | +4.0* | " | " |
| Comparative Sample 6 | 0.83 | +110 | +2.5 | moderate | " |
| 7 | 0.82 | +150 | +2.0 | " | " |
| 8 | 0.81 | +100 | +2.0* | " | " |
| 9 | 0.80 | 0 | 0 | poor | sticky |
| 10 | 0.77 | + 80 | 0* | " | " |

\* For (a) to (d), see the comments in Table 6.

The data in Table 9 shows that the video tape samples prepared according to the present invention were suitable for high-density recording because they had good wear resistance and long-term stability (e.g. absence of stickiness), exhibited high S/N ratios and produced high reproduction output as compared with the conventional product. Tape samples No. 32 to No. 43 were those of video tape, but the present inventors confirmed that similar advantages were obtained when audio tape samples were prepared using the dispersions of surface-treated ferromagnetic particles according to the present invention.

EXAMPLE 44

The magnetic paint compositions used in preparing the tape samples Nos. 32 to 43 and those used in preparing comparative samples Nos. 6 to 10 were spread with an applicator onto glass plates to form magnetic layers having a wet thickness of 60 microns. Under observations with an electron microscope, the magnetic layers prepared from the comparative magnetic paints contained much more agglomerates of ferromagnetic particles than those used in preparing samples Nos. 32 to 43 according to the present invention. This shows the high uniformity of the ferromagnetic particles dispersed in these magnetic paints.

EXAMPLE 45

A hundred parts of Co-containing $Fe_3O_4$ particles was dispersed in 1,000 parts of $1 \times 10^{-4}$ N aqueous solution of $AlCl_3$ as in Example 1. After adding 300 parts of a 2% toluene solution of sodium eicosyl-benzenesulfonate, the resulting mixture was well stirred to form a uniform dispersion. Upon standing, the dispersion separated into aqueous and organic (toluene) layers. The aqueous layer was removed and 50 parts of a molecular sieve was added to the remaining toluene layer. After agitating the mixture, the molecular sieve was filtered off to leave a toluene dispersion of the surface-treated ferromagnetic particles (this was referred to as dispersion sample No. 46).

EXAMPLE 46

A toluene dispersion of surface-treated ferromagnetic particles was prepared from the following formulation as in Example 45.

| Components | Amounts (in parts) |
|---|---|
| Co-containing $Fe_3O_4$ particles | 100 |
| Aqueous NaOH solution (ca. $1 \times 10^{-4}$ N) | 1,000 |
| N-cetyl-N-ethyl morpholinium ethosulfate (as 2% toluene solution) | 300 |

The resulting dispersion was referred to as dispersion sample No. 46.

## EXAMPLE 47

A toluene dispersion of surface-treated ferromagnetic particles was prepared from the following formulation as in Example 45.

| Components | Amounts (in parts) |
|---|---|
| Fe particles | |
| Aqueous KOH solution (ca. $1 \times 10^{-4}$ N) | 1,000 |
| N-cetyl-N-ethyl morpholinium ethosulfate (as 2% toluene solution) | 300 |

The resulting dispersion was referred to as dispersion sample No. 47.

## COMPARATIVE EXAMPLE 11

A hundred parts of Co-containing $Fe_3O_4$ particles was dispersed in 1,000 parts of a toluene solution containing 5 parts of lecithin. The resulting dispersion was referred to as comparative dispersion sample No. 11.

## COMPARATIVE EXAMPLE 12

A hundred parts of Fe particles was dispersed in 1,000 parts of a toluene solution containing 5 parts of lecithin. The resulting dispersion was referred to as comparative dispersion sample No. 12.

COMPARATIVE EXAMPLE 13

A hundred parts of non-treated Co-containing $Fe_3O_4$ particles was dispersed in 1,000 parts of toluene, and the resulting dispersion was referred to as comparative dispersion sample No. 13.

COMPARATIVE EXAMPLE 14

A hundred parts of non-treated Fe particles was dispersed in 1,000 parts of toluene, and the resulting product was referred to as comparative dispersion sample No. 14.

The dispersibility of the ferromagnetic particles in dispersion samples Nos. 45 to 47 was compared with that of the particles in comparative dispersion samples Nos. 11 to 14 by measuring their sedimentation velocity. The results are shown in Table 10.

Table 10

|  | Sedimentation velocity (mm/24 hr.) |
| --- | --- |
| Dispersion sample No. 45 | 0 |
| 46 | 0 |
| 47 | 0 |
| Comparative sample No. 11 | 100 |
| 12 | 120 |
| 13 | All particles sedimented |
| 14 | All particles sedimented |

The above data shows that the dispersions of ferromagnetic particles prepared by the method of the
present invention were characterized by uniform dispersion of the magnetic particles under hydrophobic
(oleophilic) conditions as compared with the conventional product.

The samples of surface-treated ferromagnetic
particles prepared in Examples 25 to 30 were put in a
ball mill and thoroughly mixed with the components listed
below. Thereafter, each mixture was intimately blended
with 3 parts of tolylene diisocyanate to prepare a
magnetic paint.

| Components | Amounts (in parts) |
|---|---|
| Surface-treated ferromagnetic particles | 75 |
| Partially hydrolyzed vinyl chloride/vinyl acetate copolymer | 7.5 |
| Polyurethane | 7.5 |
| Silicone oil | 7.5 |
| Methyl ethyl ketone | 70 |
| Toluene | 50 |
| Cyclohexanone | 5 |

Each of the magnetic paints was applied to one
side of a polyethylene terephthalate film (15 μm thick)
in a magnetic field so as to form a magnetic layer in
a dry thickness of 5 μm. The resulting broad web was was super-calendered and slit into video tape samples 12.7 mm wide.

The toluene dispersions of ferromagnetic particles prepared in Examples 45 to 47 and Comparative Examples 11 to 14 were concentrated until the content of ferromagnetic particles in each dispersion became 60%. A hundred parts of each concentrate was put in a ball mill and thoroughly mixed with the components listed below. Thereafter, each mixture was intimately blended with 2.5 parts of tolylene diisocyanate to prepare a magnetic paint.

| Components | Amounts (in parts) |
|---|---|
| Partially hydrolyzed vinyl chloride/ vinyl acetate copolymer | 6 |
| Polyurethane | 6 |
| Silicone oil | 1.2 |
| Methyl ethyl ketone | 55 |
| Cyclohexanone | 4 |

Each of the magnetic paints was applied to one side of a polyethylene terephthalate film (15 µm thick) in a magnetic field so as to form a magnetic layer in a dry thickness of 5 µm. The resulting broad web was super-calendered and slit into video tape samples 12.7 mm wide. The characteristics of the tape samples prepared from the magnetic paints formed in Examples 25 to 30 and 45 to 47, as well as those formed in
Comparative Examples 1 to 5 and 11 and 12 are shown
in Table 11.

Table 11

| Tape sample No. | Br/Bm | Output up to 4 MHz (mvp-p) (a) | S/N radio (dB) (b) | Wear resistance (c) | Stickiness (d) |
|---|---|---|---|---|---|
| 25 | 0.84 | +190 | +3.5 | Good | Not sticky |
| 26 | 0.84 | +190 | +3.5 | " | " |
| 27 | 0.87 | +230 | +3.5 | " | " |
| 28 | 0.85 | +210 | +3.5 | " | " |
| 29 | 0.82 | +210 | +3.0 | " | " |
| 30 | 0.82 | +230 | +3. | " | " |
| 45 | 0.84 | +200 | +3.5 | " | " |
| 46 | 0.87 | +230 | +4.0 | " | " |
| 47 | 0.83 | +230 | +3.5 | " | " |
| Comparative sample No. 1 | 0.82 | +100 | +2.5 | Moderate | " |
| 2 | 0.83 | +150 | +2.0 | " | " |
| 3 | 0.80 | +100 | +2.0 | " | " |
| 4 | 0.80 | 0 | 0 | Poor | Sticky |
| 5 | 0.78 | +80 | 0 | " | " |
| 11 | 0.83 | +150 | +2.5 | Moderate | Not sticky |
| 12 | 0.80 | +110 | +2.5 | " | " |

\* For (a) to (d), see the comments in Table 6.

The data in Table 11 shows that the video tape samples prepared according to the present invention were suitable for high-density recording because they had good wear resistance and long-term stability (e.g. absence of stickiness), exhibited high S/N ratios and produced high reproduction output as compared with the conventional product. Tape samples Nos. 25 to 30 and 45 to 47 were those of video tape, but the present inventors confirmed that similar advantages were obtained when audio tape samples were prepared using the dispersions of surface-treated ferromagnetic particles according to the present invention.

## EXAMPLE 48

The magnetic paint compositions used in preparing the tape samples Nos. 25 to 30 and 45 to 47, as well as those used in preparing comparative tape samples Nos. 1 to 5 and 11 and 12 were spread with an applicator onto glass plates to form magnetic layers having a wet thickness of 60 microns. Under observations with an electron microscope, the magnetic layers prepared from the comparative magnetic paints contained much more agglomerates of ferromagnetic particles than those used in preparing samples Nos.25 to 30 and 45 to 47 according to the present invention. This shows the high uniformity of the ferromagnetic particles dispersed in these magnetic paints.

- 66 -

C L A I M S

1. A process for producing surface-treated ferromagnetic particles which comprises dispersing ferromagnetic particles in an electrolytic solution and then treating said particles with a surfactant having an electric charge of a polarity opposite to that of the charge on the surface of said particles.

2. A process according to claim 1, wherein said electrolytic solution having the ferromagnetic particles dispersed therein is treated with a solution of said surfactant in a hydrophilic solvent, and a hydrophobic solvent is added to the so-treated solution to transfer said ferromagnetic particles into the hydrophobic solvent and recovering them therefrom.

3. A process according to claim 1, wherein said electrolytic solution having the ferromagnetic particles dispersed therein is treated with a solution of said surfactant in a hydrophobic solvent to transfer said ferromagnetic particles into said hydrophobic solvent layer and recovering them therefrom.

4. A process according to any one of claims 1 to 3 wherein the surface-treated particles are applied as a magnetic layer to a non-magnetic base to form a magnetic recording medium.

5. A process according to claim 4, wherein said magnetic layer is formed by coating the non-magnetic base with a dispersion containing a binder in said hydrophobic solvent to which the surface-treated ferromagnetic particles have been transferred.

6. A process according to any one of the preceding claims wherein the surfactant is used in an amount from 0.1 to 10% by weight based on the weight of the ferromagnetic particles.

European Patent
Office

**EUROPEAN SEARCH REPORT**

Application number

EP 83 30 4003

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (Int Cl. ³) |
| A | Patent Abstracts of Japan vol. 3, no. 34, 22 March 1979 page 93E99 & JP-A-54-12707 | 1,4 | G 11 B    5/70 |
| A | Patent Abstracts of Japan vol. 6, no. 22, 9 February 1982 & JP-A-56-143533 | 4,6 | |
| A | Patent Abstracts of Japan vol. 6, no. 18, 2 February 1982 & JP-A-56-140528 | 4 | |
| A | DE-A-2 829 344   (SONY) * Page 9, lines 1-33 * | 1,6 | |
| A | Patent Abstracts of Japan vol. 5, no. 78, 22 May 1981 & JP-A-56-26411 | | **TECHNICAL FIELDS SEARCHED (Int. Cl. ³)** |
| A | Patent Abstracts of Japan vol. 4, no. 47, 11 April 1980 page 62P6 & JP-A-55-17828 | | G 11 B    5/70 H 01 F    1/00 |

The present search report has been drawn up for all claims

| Place of search | Date of completion of the search | Examiner |
|---|---|---|
| BERLIN | 26-09-1983 | WIBERGH S.R. |